# EUROPÄISCHE PATENTSCHRIFT

(11) **EP 2 807 212 B1**
(45) Veröffentlichungstag und Bekanntmachung des Hinweises auf die Patenterteilung: **26.04.2017**
(21) Anmeldenummer: 13701437.9
(22) Anmeldetag: 24.01.2013
(51) Int. Cl.: C08J 9/12, C08J 9/14, C08J 9/08, C08H 7/00, C07G 1/00

(54) **SCHÄUME AUS LIGNIN-FURANDERIVAT-POLYMEREN UND DEREN HERSTELLUNGSMETHODE**
FOAMS COMPOSED OF LIGNIN-FURAN DERIVATIVE POLYMERS AND PRODUCTION METHOD THEREFOR
MOUSSES EN POLYMÈRES DE LIGNINE / DÉRIVÉ DE FURANE ET LEUR PROCÉDÉ DE FABRICATION

(30) Priorität: 24.01.2012 AT 772012; 06.07.2012 AT 7532012
(43) Veröffentlichungstag der Anmeldung: 03.12.2014
(73) Patentinhaber: Lenzing Aktiengesellschaft, 4860 Lenzing (AT)
(72) Erfinder: TONDI, Gianluca, 83395 Freilassing (DE); EBNER, Michael, A-5412 Puch (AT); WIELAND, Stefanie, 72070 Tübingen (DE); LINK, Martin, A-5431 Kuchl (AT); KOLBITSCH, Christian, A-6060 Hall in Tirol (AT)
(74) Vertreter: Patronus IP Patent- und Rechtsanwälte
(86) Internationale Anmeldenummer: PCT/EP2013/051378
(87) Internationale Veröffentlichungsnummer: WO 2013/110729

(56) Entgegenhaltungen:
- FR-A1- 2 250 796
- US-A- 3 919 127
- DATABASE CA [Online] CHEMICAL ABSTRACTS SERVICE, COLUMBUS, OHIO, US; 22. April 2001 (2001-04-22), "Preparation of foamed plastics based on lignin-furfural resins", XP002693930, gefunden im STN Database accession no. 59:75928 & BRONOVITSKII V. E. & VOLOCHKOVICH M. A.: FIZ. I KHIM. PRIRODN. I SINTETICH. POLIMEROV, Nr. 1, 1. Januar 1962 (1962-01-01), Seiten 231-233,
- DATABASE WPI Week 201174 Thomson Scientific, London, GB; AN 2011-N73342 XP002693931, & JP 2011 219734 A (HITACHI CHEM CO LTD) 4. November 2011 (2011-11-04)

## Beschreibung

### ERFINDUNGSFELD:

Die Erfindung betrifft eine Methode der Herstellung von Schäumen, die aus natürlichen Lignin- Furan Polymeren bestehen.

### HINTERGRUND DER ERFINDUNG

Lignin ist das häufigste organische, aromatische Polymer das in allen Gefäßpflanzen vorkommt, ein Polymer mit hohem Molekulargewicht, das aus Derivaten der Zimtsäure gebildet wird. Die Hauptbestandteile Coniferyl-, p-Cumaryl- und Sinapylalkohol bilden eine dreidimensionale, verzweigte Struktur.

In der Papier- und Zellstoffindustrie werden große Mengen von Lignin während des chemischen Aufschlusses von Holz und anderen Pflanzenmaterialien produziert. Die bisherige Nutzung von Lignin beschränkt sich hauptsächlich auf die energetische Verwertung in einer Verbrennungsanlage, deren Hauptzweck das Recycling von Aufschlusschemikalien in der Abwassersuspension darstellt. Eine solche Abwassersuspension wird in der Papier- und Zellstoffindustrie auch als Ablauge bezeichnet.

In einigen Fällen wird die Suspension aus Ligninderivaten und Aufschlusschemikalien ohne Vorreinigung in Flüsse bzw. Meere abgeleitet, was eine erhebliche Belastung der Umwelt nach sich zieht. Diese Erfindung hat den Zweck, das Nebenprodukt der Papier- und Zellstoffindustrie, Lignin, zu nutzen.

Alternative Verfahren, um Ligninderivate aus den Schwarzlaugen und sonstigen Ablaugen der Zellstoffindustrie aufzuwerten, wurden bereits gefunden. Die wirtschaftliche Bedeutung dieser Methoden ist jedoch gering. Bekannte Untersuchungen befassen sich bereits mit der Polymerbildung von Ligninen. Hintergrund ist die Bildung von Lignin in der Natur, die durch biosynthetische Polymerisation von Vorstufen des Zimtalkohols von statten geht. Während des Aufschlusses von Holz und Pflanzenmaterial bei der Zellstoffgewinnung werden die Ligninpolymere zu Fragmenten aufgebrochen, die denen eines natürlichen Abbauprozesses entsprechen. Diese Bruchstücke des ursprünglichen Polymers weisen Phenylpropan auf, welches reaktive Gruppen aufweist. Diese sind in der Lage, Repolymerisationsreaktionen auszulösen und waren Ansatzpunkt der oben genannten Untersuchungen zur Nutzung von Lignin.

Die Forschung beschäftigt sich bereits seit langem mit der Reaktion von Ligninen mit Aldehyden zur Bildung von Phenol-Formaldehyd-Harzen. Besonders an einer partiellen Substitution von Phenol durch Ligninderivate wurde gearbeitet, jedoch ohne bisher zufriedenstellende Ergebnisse zu erreichen. Der Hauptgrund für den mangelnden Erfolg ist erwiesenermaßen die geringe Reaktivität des Lignins bzw. dessen Polymerfragmenten. Die geringe Reaktivität führt zu einer ungenügenden Vernetzung der Ligninfragmente, was die schlechten Klebeeigenschaften erklärt. Furanderivate z.B. Furfurylalkohol und Furfural sind organische Verbindungen, bestehend aus einem Ersatz-Furanring. Diese Produkte sind allgemein löslich in Wasser sowie in vielen organischen Lösungsmitteln. Großtechnisch wird Furfurylalkohol durch die katalytische Reduktion von Furfural hergestellt, welches durch Hydrolyse von Hemicellulosen gewonnen wird. Ausgangsprodukte zur Gewinnung von Furfural sind hauptsächlich Maiskolben und Zuckerrohr- Bagasse. Die Reaktivität von Furfurylalkohol nimmt mit der Abnahme des pH-Wertes stark zu. In einer stark sauren Umgebung findet eine rasche Polymerisation statt, während eine schwach saure Umgebung eine langsame Polymerisation versursacht. Die Polymerisation kann außerdem durch eine erhöhte Temperatur beschleunigt werden. Industriell wird Furfurylalkohol bisher als Lösungsmittel bei der Herstellung von Harzen und Klebstoffen, sowie als Netzmittel oder zur chemischen Holzmodifikation eingesetzt.

Verbindungen aus vorbehandeltem, plastifiziertem Lignin und aktiviertem Furfurylalkohol als Klebstoff sind bereits veröffentlicht. Das in diesen Verbindungen enthaltene Maleinanhydrid kann sowohl als Reaktionspartner als auch als Katalysator reagieren (Guigo et al., 2010).

Vergleichbare Lösungen, die Maleinanhydrid beinhalten liegen auch als Patent vor (US 6 747 076 B2). Metallische Ionen wie Eisen oder Zink sind hier hauptverantwortlich für die Bildung einer ausreichenden Vernetzung mit Holz.

US 3 919 127 A offenbart einen Schaum, hergestellt aus Furanderivaten, Lignin und n-Hexan als Treibmittel. Die vorliegende Erfindung befasst sich mit der Bildung von Polykondensationsharzen zwischen Furanderivaten und Lignin in saurem Milieu, die unter Zugabe von Wasser als Treibmittel eine schaumartige Struktur ausbilden.

Gegenstand der vorliegenden Erfindung ist daher ein Polymerschaum aus Lignin und einem Furanderivat, ausgewählt aus der Gruppe bestehend aus Furfuryl-Alkohol und Furfural als matrixbildender Komponente, erhältlich durch säurekatalysierte Polykondensation und Expansion von Lignin und dem Furanderivat, wobei als Treibmittel Wasser verwendet wird. In einer bevorzugten Ausführungsform ist der erfindungsgemäße Schaum ein Hartschaum.

Der entstehende Schaum kann mit Hilfe verschiedener, unbehandelter Papierabwässer, insbesondere Ablaugen aus der Zellstoffherstellung, gebildet werden, die zu einem großen Teil Lignin enthalten.

Unter der Bezeichnung "Ablauge" soll hier die Kochlauge, die beim chemischen Aufschluss von Holz und anderen Pflanzenmaterialien nach der Abtrennung von Zellstoff entsteht, verstanden werden. Diese Ablauge kann aus dem sogenannten Sulfitverfahren (d.h. Sulfitablauge, Braun- oder Rotlauge) oder aus dem Kraftverfahren (d.h. Schwarzlauge) stammen. Bevorzugt wird hier jeweils die eingedickte Ablauge, auch Dicklauge genannt. Grundsätzlich ist auch die Verwendung der unverdünnten Ablauge, auch Dünnlauge genannt, möglich.

Zusätzlich ist es auch denkbar, Lignin aus anderen Aufschlussverfahren, z.B. Organosolv, oder anderen Bioraffinerieverfahren zu gewinnen und zu verwenden.

Grundsätzlich ist jedes Lignin für die Anwendung in dieser Erfindung geeignet, beispielsweise solches Lignin, das in vorhergehenden Verfahren aufkonzentriert, isoliert und ggf. gereinigt wurde.

Bevorzugt enthält der erfindungsgemäße Polymerschaum mindestens 20 Gew.% Lignin.

Der erfindungsgemäße Prozess umfasst nur drei Stufen: Mischen der Bestandteile, Hinzufügen des sauren Katalysators und Polymer- und Schaumbildung unter Zugabe von Energie.

Geeignete Furanderivate sind z.B. Furfurylalkohol und Furfural.

Da das Furanderivat in einer sauren Umgebung als Reaktionspartner verwendet wird, stellt die geringe Reaktivität von Lignin kein Problem dar. Das gebildete Polymer dieser Co-Polymerisation ist starr und stabil. Dieses entsteht, wenn das Ligninsubstrat in wässriger Lösung und das Furanderivat, wie z.B. Furfurylalkohol, zu einer homogenen Suspension vermischt werden und unter sauren Bedingungen aushärten. Durch die zugeführte Energie wird durch Evaporation die Bildung eines Schaumes erreicht.

Zusätzlich können Additive beigemengt werden, die je nach den gewünschten Anforderungen des Schaumes dosiert werden müssen. Sinnvolle Zusatzstoffe, um etwa ein stabileres Polymer zu generieren, sind Polyurethan, Aminoplaste, phenolische Klebstoffe oder Isocyanate.

Kurzkettige Aldehyde (z.B. Formaldehyd, Glyoxal) verkürzen die Polymerisationszeit und verstärken somit die Struktur durch eine Erhöhung der Dichte. Die Beigabe ionischer oder nicht- ionischer Tenside verändert die Zellgeometrie und somit die Affinität gegenüber Wasser. Öle, Wachse, Polyethylenglycol, Polyvinylalkohol und andere langkettige Hydroxidverbindungen können beigemischt werden, um die homogene Durchmischung der Suspension zu erleichtern. Die Beigabe von Bor oder Phosphor erhöht die Brandbeständigkeit. Feste Bestandteile (z.B. Holzmehl, Baumwollfasern, Zellulose) können verwendet werden um den Preis zu senken bzw. bestimmte Eigenschaften hervorzuheben. In einer bevorzugten Ausführungsform enthält der erfindungsgemäße Polymerschaum daher wie hier beschrieben zusätzlich zumindest ein Füllmittel und/oder einen Zuschlagstoff.

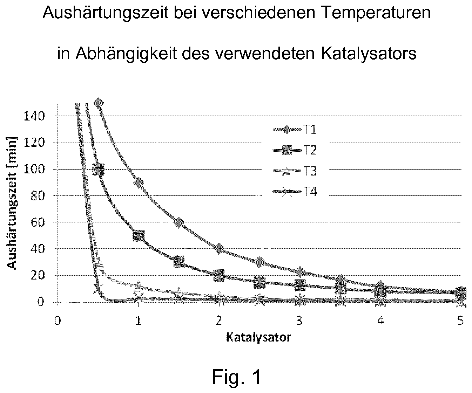

Figur 1 zeigt die Aushärtungszeit des Lignin-Furfuryl-Verbundes in Abhängigkeit der Menge des verwendeten Katalysators bei verschiedenen Temperaturen (T1<T2<T3<T4).

Das entstehende Polymer ist vergleichbar mit dem von Polymerschäumen auf Basis von Tannin. Diese wurden in verschiedenen Studien innerhalb der letzten vier Jahre entwickelt und detailliert beschrieben. Die wichtigsten Charakteristika von Tanninschäumen lauten wie folgt
- Brandbeständigkeit
- Gute Luftschall- und Wärmedämmeigenschaften
- Hohe Affinität gegenüber Wasser
- Chemische Stabilität
- Metallabsorption

Weiters zeigen Tanninschäume eine stabile und gleichmäßige Verkohlung. Aus diesem Grund können diese Materialien auch als Ausgangsprodukt für Kohlenstoffschäume verwendet werden.

Aufgrund dieser Eigenschaften können diese Tanninschäume unter anderem als thermische oder akustische Dämmstoffe, Brandschutzpanele, Stoßdämpfer, Absorber für Wasser oder Lösungsmittel, Ausgangsstoff für Kohlenstoffschäume, Trägermaterial für Katalysatoren, Füllstoffe oder Verpackungsmaterial genutzt werden.

Aus chemischer Sicht sind Lignin und kondensiertes Tannin vergleichbar, da beide Substrate aus aromatischen, hochmolekularen Verbindungen mit reaktiven Hydroxylgruppen aufgebaut sind. Daraus lässt sich schließen, dass die meisten Eigenschaften von Tanninschäumen in ähnlicher Weise auch auf Ligninschäume zutreffen. Die geringere Reaktivität von Lignin bedarf jedoch einer umfangreichen Modifikation der Formulierung und der Herstellung: die zugegebende Energie bzw. die Menge des zugegeben Katalysators muss drastisch erhöht werden und das Verhältnis von Furanderivat, insbesondere Furfurylalkohol oder Furfural, und phenolischem Stoff muss neu eingestellt werden. Darüber hinaus sind sämtliche Mischungsverhältnisse zwischen kondensierten Tanninen und Lignin möglich.

Lignin ist erheblich leichter und in größeren Mengen und als Nebenprodukt von etablierten industriellen Produktionsverfahren verfügbar als Tannin. Es ist das Verdienst dieser Erfindung, überraschenderweise einen Weg gefunden zu haben, Lignin für die erfindungsgemäßen Anwendung zu nutzen.

Gegenstand der vorliegenden Erfindung ist auch ein Verfahren zur Herstellung eines Polymerschaums aus Lignin, einem Furanderivat, wie z.B. Furfurylalkohol oder Furfural als matrixbildender Komponente, und einem Treibmittel, das folgende Schritte aufweist:
(a) Zubereiten einer Mischung enthaltend Lignin, das Furanderivat und Wasser als Treibmittel; und
(b) Zumischen eines sauren Katalysators; und
(c) Exotherme Polykondensation und unter Zuführung von externer Energie eine Expansion zu einem Polymerschaum.

Polykondensation und Expansion laufen im Wesentlichen parallel, d. h. gleichzeitig ab. Allerdings kann je nach Ausgangsbedingungen die Polykondensation zuerst einsetzen und die Expansion - unter anderem abhängig vom verwendeten Treibmittel - etwas später beginnen.

Bevorzugt enthält die Mischung in Schritt (a) mindestens 20 Gew.%, bevorzugt 20 bis 70 Gew.% Lignin.

In einer weiteren bevorzugten Ausführungsform enthält die Mischung in Schritt (a) 10 bis 50 Gew. % Furanderivat, vorzugsweise jedoch 10 - 50 und besonders bevorzugt 15 - 35 Gewichts-%.

Vor dem Schritt (c) kann zusätzlich zumindest ein Füllmittel und/oder Zuschlagstoff zugemischt werden.

In einer weiteren bevorzugten Ausführungsform enthält die Mischung vor dem Schritt (c) maximal 40 Gew. % phenolische Verbindungen. Der Begriff "phenolische Verbindungen" bezieht sich jeweils auf die reine phenolische Trockensubstanz, d. h. ohne Wasser etc. Wird der Anteil von 40 Gew.% überschritten, so wird die Reaktionsmasse zu zähflüssig, um noch einen Polymerschaum bilden zu können..

In Abhängigkeit des verwendeten Papierabwassers bzw. der Ablauge beträgt die relative Menge von Furfurylalkohol und Lignin zwischen 50 und 110% Gewichtsanteile. Damit ist gemeint, dass Mischungsverhältnisse möglich sind zwischen 50 Teilen Furfurylalkohol/110 Teilen Lignin und 50 Teilen Lignin/110 Teilen Furfurylalkohol. Umgerechnet entspricht das einem Gewichtsverhältnis von Furfurylalkohol zu Lignin zwischen 0,45 und 2,2.

Vorzugsweise beträgt die relative Menge von Furfurylalkohol und Lignin jedoch zwischen 75 und 110% (entspricht einem Gewichtsverhältnis von Furfurylalkohol zu Lignin zwischen 0,68 und 1,47) und besonders bevorzugt 85 und 100% Gewichtsanteilen (entspricht einem Gewichtsverhältnis von Furfurylalkohol zu Lignin zwischen 0,85 und 1,18).

Die Menge des Katalysators bewegt sich zwischen 3 und 25% Gewichtsanteilen, bezogen auf die Masse der gesamten Suspension inklusive aller Additive. Die Temperatur muß immer höher sein als die Siedetemperatur des verwendeten Treibmittels.
- Zwar ist die Polymerisationsreaktion zwischen Furfurylalkohol und Lignin in einer pH-sauren Umgebung ohnehin exotherm, eine zusätzliche Energie beschleunigt jedoch diesen Prozess und ermöglicht eine kontrollierte Evaporation. Die Energie kann konduktiv, konvektiv und radiativ eingebracht werden.
   Um diese Methoden zu simulieren, wurden die Ligninschäume mittels Heizplatten, zwischen beheizten Pressplatten und in einer Mikrowelle produziert. Dieser Parameter ist extrem wichtig, um einen kontrollierten Ablauf und eine homogene Struktur zu erzielen und muss mit dem sauren Katalysator genau abgestimmt werden.
- Abhängig vom Mischverhältnis kann die Suspension bis zu 70 Gewichts-% Lignin enthalten, vorzugsweise jedoch 20 - 50 bzw. 26 - 38 Gewichts-%.
- Abhängig vom Mischverhältnis kann die Suspension bis zu 60 Gewichts-% des Furanderivates, insbesondere Furfurylalkohol bzw. Furfural, enthalten, vorzugsweise jedoch 10 - 50 bzw. besonders bevorzugt 15 - 35 Gewichts-%.
- Abhängig vom Mischverhältnis kann die Suspension bis zu 30 Gewichts-% einer Säure oder eines Säuregemisches enthalten, vorzugsweise jedoch 3 - 25 bzw. 8-17 Gewichts-%. In einer weiteren bevorzugten Ausführungsform sind daher nach dem Schritt (b) 3 bis 25 Gew. % Säure in der Mischung enthalten, besonders bevorzugt 8 bis 17 Gew. % Säure.
   Die eingesetzte(n) Säure(n) beeinflussen das Verhältnis zwischen Polymerisations- und Evaporationsreaktion aufgrund der verschiedenen pH-Werte. Dies beeinflusst die Oberflächeneigenschaften und die Zellgeometrie, sowie in weiterer Folge Charakteristika wie Festigkeit und Dichte der Produkte. Anorganische Säuren (z.B. Schwefelsäure, Salzsäure, Salpetersäure, Phosphorsäure) sind die am häufigsten verwendeten Katalysatoren, jedoch sind auch einige organische Säuren wie p-Toluolsulfonsäure, Trifluoressigsäure, Ameisensäure oder Essigsäure denkbar. Auch Maleinsäureanhydrid kann verwendet werden.
- Abhängig vom Mischverhältnis kann die Suspension bis zu 50 Gewichts-% an Additiven oder Füllstoffen enthalten; mindestens ein weiterer Stoff könnte zu den oben genannten zusätzlich beigemengt werden.
- Abhängig vom Evaporationsgrad, dessen Intensität die Dichte und Festigkeit sowie zahlreiche andere Eigenschaften beeinflusst, wird mindestens Wasser als Treibmittel zugegeben. Lösungsmittel mit einem niedrigen Siedepunkt (z.B. Diethylether, Pentan, Hexan, Cyclopentan, Cyclohexan, Aceton, Methanol, Propanol, Tetrahydrofuran, Benzen oder Fluorchlorkohlenwasserstoff) können benutzt werden um Schäume mit geringen Dichten zu erzeugen.
   Lösungsmittel mit einem höheren Siedepunkt (z.B. Toluen, Pyridin, Butanol oder Essigsäure) verändern ebenfalls die Oberflächen der Zellstruktur und beeinflussen spezifische Charakteristika. Die Beigabe einer Mischung verschiedener Lösungsmittel ist unter Vorbehalt des gewünschten Endergebnisses ebenfalls eine sehr sinnvolle Variante.
   Ein besonders bevorzugtes Treibmittel ist Wasser, beispielsweise das bereits in der Ablauge vorhandene Prozesswasser.
- Für den Prozess der Evaporation können außerdem CO2- freisetzende Salze (z.B. NaHCO3 verwendet werden.

Die Geschwindigkeit der Polykondensationsreaktion kann durch folgende Parameter eingestellt werden und reagiert schneller wenn,
- eine stärkere Säure verwendet wird,
- die verwendete Säure höher konzentriert ist,
- die zugeführte Energie höher ist, oder
- der Anteil an Furfurylalkohol in der Suspension größer ist.

Eine Schaumbildung als zweite, parallel ablaufende Reaktion findet nur statt, wenn Treibmittel beigemischt werden und/oder externe Energie zugeführt wird, um das vorhandene Wasser, die Treibmittel und/oder die Lösungsmittel zu verdampfen.

In einer bevorzugten Ausführungsform wird im Schritt (c) des erfindungsgemäßen Verfahrens daher Wärme zugeführt.

Diese Wärmezufuhr kann insbesondere durch konduktive, konvektive oder radiative (d. h. mittels Wärmestrahlung) Wärmeübertragung erfolgen.

Bevorzugt wird Schritt (c) bei einer Temperatur von 10 bis 250°C über 30 Sekunden bis 10 min. durchgeführt. Abweichende Bedingungen wie z.B. 20 min bei 120°C sind jedoch grundsätzlich ebenfalls möglich.

Die flüssige bis zähflüssige Masse wird in Formen beliebiger Grundfläche aus Holz, Holzwerkstoffen, Glas, Metall oder Kunststoff zur Reaktion gebracht. Auch sonstige geeignete Oberflächen bzw. Materialien kommen hierfür in Frage.

Eine mögliche Variante des erfindungsgemäßen Prozesses der Produktion der Ligninschäume ist im Folgenden beschrieben:
1. Bestimmung des pH-Wertes des Ligninextraktes bzw. des konzentrierten Papierrestwassers, d. h. der konzentrierten Ablauge:
   - Bei einer alkalischen Lösung muss der pH-Wert mit Schwefelsäure neutralisiert werden.
   - Bei einer leicht sauren Lösung (pH 4 bis 7) ist keine Modifizierung nötig, die Menge des später beigemischten Katalysators kann anteilig verringert werden.
   - Eine stark saure Lösung wird mit NaOH verdünnt, bis sich ein pH-Wert von ca. 4 einstellt
   - Wenn das Lignin als pH-neutrales oder leicht saures Pulver vorliegt, sind Mischungen ohne Wasser durch direkte Vermischung mit dem Furanderivat. insbesondere dem Furfurylalkohol bzw. dem Furfural, möglich.
2. Bestimmen und Einstellen des Feststoffgehaltes
   - Wenn das Lignin als Pulver oder als hochkonzentrierte Lösung vorliegt, muss die Substanz mit Wasser oder Lösungsmittel (Furfurylalkohol, Furfural oder potentielle Treibmittel für den Evaporationsprozess) verdünnt werden.
   - Bei einem Feststoffgehalt von unter 20% muss das Konzentrat im Vorfeld eingedickt werden
   - Ein Feststoffgehalt von ca. 60% ist als Ausgangsprodukt erwünscht, Lösungen mit geringeren Feststoff- bzw. Ligninanteilen sind ebenfalls möglich, jedoch muss dadurch die Mischung um Füllstoffe bzw. einem höheren Anteil an Furfurylalkohol ergänzt werden.
3. Manuelles oder mechanisches Mischen der wässrigen Ligninlösung bzw. der Ligninlösung in anderen Lösungsmitteln mit Furfurylalkohol bis eine homogene Suspension entsteht. Alternativ kann das Mischen auch magnetisch oder via Ultraschall erfolgen.
4. Beimengen aller Zusatzstoffe (z.B. Pulver, Fasern, flüssige Komponenten) sowie der Treibmittel und erneutes Mischen bis eine homogene Masse vorliegt.
   - Durch Zusatzstoffe, Treib- und/oder Lösungsmittel kann die Viskosität auf das gewünschte Level eingestellt werden.
5. Beimengen des sauren Katalysators und erneutes Homogenisieren der Mischung
   - Bei einem sauren Ausgangsprodukt (siehe Schritt 1), muss die Menge an verwendetem Katalysator reduziert werden.
   - Zum Einstellen der Viskosität kann die verwendete Menge an Säure geringfügig variiert werden (schnellerer Start und kürzere Dauer der Polymerisationsreaktion sind zu beachten).
6. Transferieren der Mischung in die Produktionsform
   - Die Viskosität darf hier den Wert 10mPa*s nicht unterschreiten
7. Die Form mit der Lignin-Furanderivatmischung, insbesondere Ligninfurfurylalkoholmischung, wird nun einer externen Energiequelle ausgesetzt; dabei ist darauf zu achten, dass die Gase, die bei der Evaporation entstehen, entweichen können.
   - Die Energie kann via beheizbaren Pressplatten, Ventilationsofen, Mikrowelle oder anderen Heizmethoden zugeführt werden.
   - Temperaturen zwischen 10 und 250°C sowie Mikrowellenstrahlung verschiedener Wellenlängen
   - Die Produktionsgeschwindigkeiten variieren je nach Menge des Katalysators, der Art der Energieeinbringung und der Höhe der Energie
   - Je größer die Energiemenge, desto geringer die benötigte Menge an Säure
   - Bei der Einbringung hoher Energien, wird die Polymerisation beschleunigt und somit die Aushärtungszeit verkürzt (Figur 1).
8. Zeitmanagement
   - Sobald die Säure mit den restlichen Inhaltsstoffen vermengt ist, beginnt die Polymerisationsreaktion, je nach Mischungsverhältnis zu Beginn sehr langsam.
   - Die Polymerisation geht bereits bei Raumtemperatur von statten, falls die Wärmeenergie nicht schnell genug beaufschlagt wird. Diese Wartezeit sollte 30 Sekunden nicht überschreiten.
9. Jedes Gleichgewicht des Mischungsverhältnisses ist möglich, jedoch besteht der wichtigste Faktor in der Kombination der Polymerisation- und der Evaporationsreaktion, die gleichzeitig stattfinden müssen (Tondi und Pizzi 2009).
10. Der Ligninschaum verklebt während des Prozesses kraftschlüssig mit Holz und Holzwerkstoffen
11. Polymerisation und Konditionierung
   - Die exotherme Reaktion der sauren Copolymerisation zwischen Lignin und dem Furanderivat" insbesondere dem Furfurylalkohol, findet bereits in den ersten Minuten statt und dauert solange an, bis alle Komponenten zu einem festen Polymer verschmolzen sind.
   - Die Verfestigung ist nach ca. 2- 7 Minuten weitgehend abgeschlossen, allerdings dauert der Prozess noch an, bis der Ligninschaum bei Raumtemperatur fertig ausgehärtet ist
12. Lösungsmittel und Reststoffe, die nicht reagiert haben, können in den Zellen eingeschlossen sein. Frischluftlagerung oder Belüftung während der Konditionierphase gewährleistet das Ausdampfen dieser Reststoffe. Dieser Zeitraum lässt sich durch Behandlung mit Vakuum verkürzen.

Gegenstand der Erfindung ist außerdem die Verwendung des oben geschriebenen, erfindungsgemäßen Polymerschaums als thermisches und/oder akustisches Isoliermaterial, flammbeständiges Panel, Schwingungsdämpfer, Wasser- und/oder Lösungsmittelabsorber, Vorläufer für Karbonschäume, Träger für Katalysator, Füllstoff oder Verpackungsmittel.

Die Erfindung wird im Folgenden durch einige Beispiele veranschaulicht:
Als Lignin-haltiges Abwasser wurde jeweils eine Ablauge aus einem Sulfitzellstoff-Kochprozess verwendet.

**Tabelle 1: Ligninschäume, produziert mit konduktiver Energie**

| Beispiel | Lignin | Furfurylalkohol | Wasser | Lösungsmittel | Säure | Heizsystem | Temperatur |
|---|---|---|---|---|---|---|---|
| | [wt%] | [wt%] | [wt%] | [wt%] | [wt%] | | [°C] |
| 1 | 32 | 33,3 | 21,3 | - | 13,3 | Heizplatte | 150°C / 2 min |
| 2 | 28,8 | 28 | 19,2 | 8 DEE | 16 | Presse | 120°C / 10min |
| 3 | 26,6 | 25,9 | 17,7 | 7,4 DEE | 22,2 | Presse | 120°C / 10min |
| 4 | 29,5 | 16,4 | 44,5 | - | 9,8 | Presse | 170°C / 7 min |

### Produktion des Polymerschaumes- Beispiel 1:

1. Einwiegen von 16g Lignin-Abwasser (60% konzentriert, pH= 6,4) in ein Becherglas.
2. Beimengen von 10g Furfurylalkohol und Homogenisieren mittels mechanischem Vermischen (400 U/min für 5 Minuten).
3. Beimengen von 4g wässriger Schwefelsäure (50%) und neuerliches Vermischen für 2 Minuten.
4. Erhitzen des Gemisches im Becherglas auf einer Heizplatte mit 150°C für 2 Minuten.
5. Das Gemisch polymerisiert, während Wasser evaporiert.
6. Anschließend kann der Ligninschaum aus dem Becherglas genommen werden.

### Produktion des Polymerschaumes- Beispiel 2:

1. Einwiegen von 12g Lignin-Abwasser (60% konzentriert, pH= 6,4) in ein Becherglas.
2. Beimengen von 7g Furfurylalkohol und Homogenisieren mittels mechanischem Vermischens (400 U/min für 5 Minuten).
3. Beimengen von 2g Diethylether und 4g wässriger Schwefelsäure (50%) und neuerliches Vermischen für 2 Minuten.
4. Die viskose Flüssigkeit wird anschließend in eine MDF- Form (5x5x2, 5cm) mit 12 Löchern (Durchmesser 4mm) an der Oberseite der Seitenwände gegossen und mit einem Deckel verschlossen.
5. Der Behälter wird für 10 Minuten zwischen zwei beheizbare Pressplatten mit der Temperatur 120°C gestellt.
6. Das Gemisch polymerisiert, während Wasser und Lösungsmittel evaporieren
7. Vor dem Konditionieren werden die Seitenwände des Behältnisses mittels einer Holzsäge entfernt.

Die Beispiele 3 und 4 wurden analog Beispiel 2, jedoch mit den in Tabelle 1 genannten Parametern durchgeführt.

**Tabelle 2: Ligninschäume, produziert mit radiativer Energie (Mikrowelle)**

| Beispiel | Lignin | Furfurylalkohol | Wasser | Säure | Energie |
|---|---|---|---|---|---|
| | [wt%] | [wt%] | [wt%] | [wt%] | [MW] |
| 5 | 32,3 | 30,7 | 21,5 | 15,3 | 200/2 min |
| 6 | 37,3 | 28,9 | 24,8 | 8,9 | 200/2 min |
| 7 | 36,6 | 28,8 | 24,4 | 10,1 | 200/2 min |

### Produktion des Polymerschaumes- Beispiel 5:

1. Einwiegen von 21g Lignin-Abwasser (60% konzentriert, pH= 6,4) in ein Becherglas.
2. Beimengen von 12g Furfurylalkohol und Homogenisieren mittels mechanischem Vermischens (400 U/min für 5 Minuten).
3. Beimengen von 6g wässriger Schwefelsäure (50%) und neuerliches Vermischen für 2 Minuten.
4. Die viskose Flüssigkeit wird anschließend in eine MDF- Form (5x5x2, 5cm) mit 12 Löchern (Durchmesser 4mm) an der Oberseite der Seitenwände gegossen und mit einem Deckel verschlossen.
5. Der Behälter wird für 2 Minuten in eine geschlossene Kammer gestellt und mit Mikrowellen (200MW) bestrahlt.
6. Das Gemisch polymerisiert, während Wasser evaporieren.
7. Vor dem Konditionieren werden die Seitenwände des Behältnisses mittels einer Holzsäge entfernt.

Die Beispiele 6 und 7 wurden analog Beispiel 5, jedoch mit den in Tabelle 2 genannten Parametern durchgeführt.

Die oben erläuterten Beispiele zeigen die Herstellung von Lignin-Furfurylalkoholpolymer-Schäumen. An Stelle von Furfurylalkohol können auch Furfural zur Herstellung der Lignin-Furanpolymerschäume verwendet werden. Erste Versuche zeigen gute Ergebnisse mit Furfural als Furanderivat.

## Patentansprüche

1. Polymerschaum aus Lignin und einem Furanderivat, ausgewählt aus einer Gruppe bestehend aus Furfuryl-Alkohol und Furfural als matrixbildender Komponente, erhältlich durch säurekatalysierte Polykondensation und Expansion von Lignin und dem Furanderivat, wobei als Treibmittel Wasser verwendet wird.

2. Polymerschaum nach Anspruch 1, zusätzlich enthaltend zumindest ein Füllmittel und/oder Zuschlagstoff.

3. Polymerschaum nach Anspruch 1 oder 2, wobei der Schaum ein Hartschaum ist.

4. Polymerschaum nach Anspruch 1 oder 2, wobei der Schaum mindestens 20 Gew.% Lignin enthält.

5. Verfahren zur Herstellung eines Polymerschaums aus Lignin und einem Furanderivat, ausgewählt aus einer Gruppe bestehend aus Furfurylalkohol oder Furfural als matrixbildender Komponente, das folgende Schritte aufweist:
(a) Zubereiten einer Mischung enthaltend Lignin, das Furanderivat und Wasser als Treibmittel; und
(b) Zumischen eines sauren Katalysators; und
(c) Exotherme Polykondensation und unter Zuführung von externer Energie eine Expansion zu einem Polymerschaum.

6. Verfahren nach Anspruch 5, wobei die Mischung in Schritt (a) mindestens 20 Gew.%, bevorzugt 20 bis 70 Gew.%, besonders bevorzugt 20 - 50 Gew.% und ganz besonders bevorzugt 26 - 38 Gew.% Lignin enthält.

7. Verfahren nach Anspruch 5 oder 6, wobei die Mischung in Schritt (a) 10 bis 50 Gew. % Furanderivat enthält.

8. Verfahren nach einem der Ansprüche 5 bis 7, wobei nach dem Schritt (b) 3 bis 25 Gew. % Säure in der Mischung enthalten ist.

9. Verfahren nach einem der Ansprüche 5 bis 8, wobei vor dem Schritt (c) zusätzlich zumindest ein Füllmittel und/oder Zuschlagstoff zugemischt wird.

10. Verfahren nach Anspruch 9, wobei die Mischung vor dem Schritt (c) maximal 40 Gew. % phenolische Verbindungen enthält.

11. Verfahren nach einem der Ansprüche 5 bis 10, wobei im Schritt (c) Wärme zugeführt wird.

12. Verfahren nach Anspruch 11, wobei die Wärmezufuhr durch konduktive, konvektive oder radiative Wärmeübertragung erfolgt.

13. Verfahren nach einem der Ansprüche 5 bis 12, wobei Schritt (c) bei einer Temperatur von 10 bis 250°C über 30 Sekunden bis 10 min. durchgeführt wird.

14. Verwendung eines Polymerschaums nach einem der Ansprüche 1 bis 4 oder hergestellt nach einem Verfahren nach einem der Ansprüche 5 bis 13 als thermisches und/oder akustisches Isoliermaterial, flammbeständiges Panel, Schwingungsdämpfer, Wasser- und/oder Lösungsmittelabsorber, Vorläufer für Karbonschäume, Träger für Katalysator, Füllstoff oder Verpackungsmittel.

## Claims

1. Polymer foam of lignin and a furan derivative, chosen from a group consisting of furfuryl alcohol or furfural as a matrix-forming component, obtainable by acid-catalyzed polycondensation and expansion of lignin and the furan derivative, wherein water is used as a blowing agent.

2. The polymer foam according to claim 1, further comprising at least one filler and / or aggregate.

3. The polymer foam according to claim 1 or 2, wherein the foam is a rigid foam.

4. The polymer foam according to claim 1 or 2, wherein the foam contains at least 20% by weight lignin.

5. A process for preparing a polymer foam from lignin and a furan derivative, chosen from a group consisting of furfuryl alcohol or furfural as a matrix-forming component, comprising the following steps:
(a) preparation of a mixture containing lignin, the furan derivative and water as a blowing agent; and
(b) admixture of an acid catalyst; and
(c) exothermic polycondensation and, by supplying external energy, an expansion to a polymer foam.

6. A method according to claim 5, wherein the mixture in step (a) contains at least 20% by weight, preferably 20 to 70% by weight, particularly preferably 20 - 50% by weight and very particularly preferably 26 - 38% by weight lignin.

7. A method according to claim 5 or 6, wherein the mixture in step (a) contains 10 to 50% by weight furan derivative.

8. The method according to one of claims 5 to 7, wherein, following step (b), from 3 to 25% by weight acid catalyst is contained in the mixture.

9. The method according to one of claims 5 to 8, wherein, prior to step (c), additionally at least one filler and / or aggregate is admixed.

10. The method according to claim 9, wherein the mixture, prior to step (c), contains a maximum of 40% by weight of phenolic compounds.

11. A method according to any one of claims 5 to 10, wherein in step (c) heat is applied.

12. The method of claim 11, wherein the heat application occurs by conductive, convective or radiative heat transfer.

13. The method according to any one of claims 5 to 12, wherein step (c) is carried out at a temperature of 10 to 250 °C for 30 seconds to 10 min.

14. Use of a polymer foam according to any one of claims 1 to 4 or produced by a process according to one of claims 5 to 13 as a thermal and / or acoustic insulation, fire-resistant panel, vibration damper, water and / or solvent absorber, precursor for carbon foams, carrier for catalyst, filler or packaging materials.

## Revendications

1. Mousse de polymère de lignine et d'un dérivé de furane, choisi parmi un groupe constitué par de l'alcool furfurylique ou du furfural en tant que composant de formation de matrice, pouvant être obtenu par polycondensation catalysée par un acide expansion de la lignine et du dérivé de furane.

2. Mousse de polymère selon la revendication 1, comprenant en outre au moins une charge et / ou un additif.

3. Mousse de polymère selon la revendication 1 ou 2, dans laquelle la mousse est une mousse rigide.

4. Mousse de polymère selon la revendication 1 ou 2, dans laquelle la mousse contient au moins 20 % en poids de lignine.

5. Procédé de préparation d'une mousse de polymère de lignine et d'un dérivé de furane, choisi parmi un groupe constitué par de l'alcool furfurylique ou du furfural en tant que composant de formation de matrice, comprenant les étapes suivantes:
(a) la préparation d'un mélange contenant de la lignine, le dérivé de furane et de l'eau en tant qu'agent(s) gonflant(s); et
(b) l'intégration dans le mélange d'un catalyseur acide; et
(c) la polycondensation exothermique et, en fournissant de l'énergie externe, une expansion à une mousse de polymère.

6. Procédé selon la revendication 5, dans lequel le mélange dans l'étape (a) contient au moins 20% en poids, de préférence de 20 à 70% en poids, de manière particulièrement préférée 20 - 50% en poids, et de manière tout particulièrement préférée 26 - 38% en poids de lignine.

7. Procédé selon la revendication 5 ou 6, dans lequel le mélange dans l'étape (a) contient 10 à 50% en poids de dérivé de furane.

8. Procédé selon l'une des revendications 5 à 7, dans lequel après l'étape (b) de 3 à 25% en poids d'acide est contenu dans le mélange.

9. Procédé selon l'une des revendications 5 à 8, dans lequel, avant l'étape (c) en outre au moins une charge et / ou un additif est intégré dans le mélange.

10. Procédé selon la revendication 9, dans lequel le mélange avant l'étape (c) contient 40% en poids au maximum de composés phénoliques.

11. Procédé selon l'une quelconque des revendications 5 à 10, dans lequel de la chaleur est appliquée à l'étape (c)

12. Procédé selon la revendication 11, dans lequel l'application de chaleur à l'étape (c) est effectuée par transmission de chaleur par conduction, par convection ou par rayonnement.

13. Procédé selon l'une quelconque des revendications 5 à 12, dans lequel l'étape (c) est effectuée à une température de 10 à 250 °C pendant 30 secondes à 10 minutes.

14. Utilisation d'une mousse polymère selon l'une quelconque des revendications 1 à 4 ou produit par un procédé selon l'une des revendications 5 à 13 en tant qu'isolation thermique et / ou acoustique, panneau résistant au feu, amortisseur de vibrations, absorbant d'eau et / ou de solvant, précurseur pour des mousses de carbone, support pour catalyseur, charge ou matériau d'emballage.
